(19) Europäisches Patentamt
European Patent Office
Office européen des brevets

(11) **EP 3 440 764 B1**

(12) **FASCICULE DE BREVET EUROPEEN**

(45) Date de publication et mention de la délivrance du brevet:
**11.10.2023   Bulletin 2023/41**

(21) Numéro de dépôt: **17713987.0**

(22) Date de dépôt: **03.04.2017**

(51) Classification Internationale des Brevets (IPC):
**H02K 21/16** [(2006.01)]

(52) Classification Coopérative des Brevets (CPC):
**H02K 21/16;** H02K 2207/03; H02K 2213/03

(86) Numéro de dépôt international:
**PCT/EP2017/057822**

(87) Numéro de publication internationale:
**WO 2017/174489 (12.10.2017 Gazette 2017/41)**

(54) **ACTIONNEUR ÉLECTROMÉCANIQUE POUR LA COMMANDE D'ÉCRANS ET INSTALLATION DOMOTIQUE COMPRENANT UN TEL ACTIONNEUR**

ELEKTROMECHANISCHER AKTUATOR ZUR STEUERUNG VON ABSCHIRMUNGEN UND HEIMAUTOMATISIERUNGSAUSRÜSTUNG MIT SOLCH EINEM AKTUATOR

ELECTROMECHANICAL ACTUATOR FOR CONTROLLING SCREENS AND HOME AUTOMATION EQUIPMENT COMPRISING SUCH AN ACTUATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.04.2016   FR 1652931**

(43) Date de publication de la demande:
**13.02.2019   Bulletin 2019/07**

(73) Titulaire: **Somfy Activites SA**
**74300 Cluses (FR)**

(72) Inventeurs:
• **TOLLANCE, Thierry**
**74930 Pers-Jussy (FR)**

• **LEMAITRE, Sébastien**
**74440 Mieussy (FR)**

(74) Mandataire: **Lavoix**
**62, rue de Bonnel**
**69448 Lyon Cedex 03 (FR)**

(56) Documents cités:
EP-A1- 2 922 183        WO-A1-2014/024973
FR-A1- 2 924 664        JP-A- 2006 197 786
US-A1- 2006 197 402     US-A1- 2011 309 707
US-B1- 6 441 528

EP 3 440 764 B1

**Description**

La présente invention concerne un actionneur électromécanique comprenant, un moteur avec un rotor et un stator de moteur, ainsi qu'une installation domotique de fermeture ou de protection solaire comprenant un tel actionneur.

De manière générale, la présente invention concerne le domaine des dispositifs d'occultation comprenant un dispositif d'entraînement motorisé mettant en mouvement un écran entre au moins une première position et une deuxième position.

Un dispositif d'entraînement motorisé comprend un actionneur électromécanique d'un élément mobile de fermeture, d'occultation ou de protection solaire, tel qu'un store ou un écran de projection, ou tout autre matériel équivalent, appelé par la suite « écran ». Un tel actionneur est connu, par exemple, de EP-A-2992183.

Les écrans équipant les bâtiments présentent des dimensions variées et le choix des matériaux utilisés se répercute considérablement sur la masse et l'inertie des éléments mobiles et, par conséquent, sur le couple nécessaire à la manoeuvre de ceux-ci. Par ailleurs, dans le cas d'écrans enroulables destinés à une utilisation en intérieur, le diamètre d'enroulement est une caractéristique critique. Ce diamètre doit être le plus faible possible, tout en permettant d'y insérer un actionneur qui est dit « tubulaire » du fait de son utilisation à l'intérieur d'un tube d'enroulement.

Les fabricants d'actionneurs électromécaniques permettant la manoeuvre automatique de tels écrans sont généralement confrontés à la nécessité de proposer des d'actionneurs électromécaniques présentant des caractéristiques de couple suffisantes à la manoeuvre d'écrans de dimensions variées, dans un diamètre relativement réduit, en particulier dans un diamètre intérieur de tube d'enroulement sensiblement égal à 40 mm.

L'invention concerne donc en particulier les actionneurs électromécaniques utilisés dans les installations domotiques plus particulièrement avec, des moteurs électriques sans balais à commutation électronique. La structure de tels moteurs est la suivante : Le moteur comprend un rotor et un stator positionnés de manière coaxiale autour d'un axe de rotation. Le rotor comprend un corps de rotor muni d'éléments magnétiques, tels que des aimants permanents, répartis sur la surface extérieure du rotor. Les éléments magnétiques du rotor sont entourés par le stator. Le stator est formé par un noyau de stator comprenant des éléments polaires supportant des bobinages, les éléments polaires étant répartis sur une paroi périphérique du stator. Ce moteur est dit à rotor interne.

Pour une application à des écrans enroulables, les actionneurs électromécaniques dits « tubulaires » présentent généralement un carter allongé cylindrique dans lequel se trouve le moteur, destiné à être enfilé dans un tube d'enroulement sur lequel l'écran s'enroule. Les moteurs compris dans de tels actionneurs électromécaniques sont donc conçus pour présenter un diamètre restreint par rapport à leur longueur. Pour d'autres types d'écrans, comme des stores vénitiens ou des stores non enroulables (plissés, cellulaires...), les actionneurs peuvent être cylindriques ou présenter une section carrée ou rectangulaire, pour être insérés dans un rail de section correspondante.

Pour certaines applications telles que les stores vénitiens, on utilise des actionneurs électromécaniques de taille réduite et qui sont relativement légers par rapport à la puissance fournie. Ceux-ci doivent fournir un couple de l'ordre de 3 à 10 Nm. De tels moteurs légers ont tendance à générer, en fonctionnement, un bruit significatif. Ce bruit provient du fait que la masse totale de l'actionneur est relativement faible, de sorte qu'il a tendance à vibrer sous l'effet des efforts électromagnétiques auxquels il est soumis.

Par ailleurs, un moteur brushless tel que celui connu de JP-A-2006-197786, qui comprend un stator entouré par un rotor, n'est pas configuré pour commander un écran et présente un diamètre important, entre 70 et 80 mm, difficilement compatible avec sa mise en place dans un tube d'enroulement d'écran de dimensions habituelles.

D'autre part, un servomoteur électrique pour système de direction assisté, tel que connu de FR-A-2 924 664, présente un rapport entre la longueur active du paquet de tôles et le diamètre extérieur de son stator qui est compris entre 0,33 et 1. Ce servomoteur est donc plus large que long. Ce document envisage une gamme de moteurs de même diamètre, dont la puissance varie en fonction de leur longueur.

La présente invention a pour but de résoudre les inconvénients précités et de proposer un actionneur électromécanique, permettant de minimiser le bruit généré en fonctionnement, tout en demeurant économique et en assurant un couple nécessaire à l'enroulement d'un écran autour d'un tube d'enroulement, conformément à ce pour quoi il est prévu.

A cet effet, la présente invention vise, selon la revendication indépendante 1, un actionneur électromécanique configuré pour la commande d'écrans appartenant à ur dispositif d'occultation de type store ou volet, l'actionneur étant configuré pour mettre en rotation un tube d'enroulement d'un écran en étant inséré dans ce tube d'enroulement ou un arbre d'entraînement sur lequel s'enroulent des cordons de déploiement d'un écran en étant inséré dans un rail, l'actionneur comprenant un moteur électrique à courant continu sans balais à commutation électronique, un rotor et un stator du moteur électrique étant positionnés de manière coaxiale autour d'un axe de rotation, un diamètre extérieur du stator dépendant d'un diamètre intérieur du tube d'enroulement ou de la section du rail, le rotor comprenant un corps de rotor muni d'éléments magnétiques répartis sur la surface extérieure du rotor, les éléments magnétiques du rotor étant entourés par le stator, lui-même formé par un noyau de stator comprenant une paroi périphérique circulaire et des éléments polaires supportant des bobinages, les éléments polaires étant répartis sur l'intérieur de la paroi périphérique.

Conformément à l'invention, un premier rapport R1 entre le diamètre extérieur du stator et son diamètre intérieur est inférieur à 1,7, de préférence inférieur 1,6, de préférence encore inférieur à 1,58, alors qu'un deuxième rapport R2 entre la longueur axiale du stator et le diamètre extérieur du stator est supérieur à 1,5, de préférence supérieur à 2.

Grâce à l'invention, et notamment grâce à la valeur du deuxième rapport R2, on obtient un actionneur électromécanique dont la longueur est largement supérieure à son diamètre, ce qui permet de l'utiliser au sein d'un tube d'enroulement d'une installation domotique. Cette configuration allongée du moteur électrique permet d'augmenter l'entrefer au sein de l'actionneur, en compensant éventuellement la perte de puissance par une augmentation de la longueur axiale du stator, ce qui permet de réduire le bruit de fonctionnement et d'améliorer la robustesse de l'actionneur, en limitant les effets des variations d'entrefer dues aux tolérances de fabrication des aimants et au procédé de fixation des aimants sur le corps de rotor et en augmentant éventuellement la masse de l'actionneur électromécanique par l'augmentation de longueur. Les défauts de construction qui conduisent à ces variations d'entrefer sont en effet à l'origine de bruits dits « anormaux ». L'augmentation d'entrefer permet d'être moins sensible à ces variations. D'autre part, la valeur du rapport R1 induit que la masse de l'actionneur est augmentée par rapport à un actionneur classique, sans augmentation substantielle de la puissance délivrée. En d'autres termes, l'invention revient à diminuer la puissance massique de l'actionneur par rapport à un actionneur classique dont le rapport R1 serait supérieur à 1,7, ce qui procède d'une approche non conventionnelle, à une époque où on a tendance à augmenter la puissance massique des actionneurs. En particulier, les valeurs des premier et deuxième rapports R1 et R2 permettent d'obtenir une puissance massique de l'actionneur inférieure à 65 watts par kilogramme (W/kg).

De façon avantageuse, le stator comprend un total de six éléments polaires, ce qui en fait un stator à six pôles

De façon avantageuse, le diamètre extérieur du moteur électrique de l'actionneur est inférieur à 40 mm, de préférence inférieur à 36 mm. Selon un autre aspect de avantageux de l'invention, les éléments magnétiques sont formés par des aimants permanents en ferrite dont l'épaisseur radiale maximale est supérieure à 3 mm. L'utilisation d'aimants en ferrite contribue également à l'obtention d'une puissance massique relativement faible. Les aimants permanents en ferrite permettent de fournir un couple relativement important, tout en conservant des coûts de production raisonnables. En effet, des aimants en ferrite sont sensiblement moins chers que des aimants en métaux rares, tels qu'en néodyme, plasto-néodyme ou néodyme fritté. De plus, les aimants en ferrite ont une puissance massique plus faible que les aimants contenant des métaux rares.

Ces rapports de diamètres et longueurs distinguent le moteur électrique selon l'invention de moteurs dits « plats », utilisés notamment pour des ventilateurs et non adaptés aux applications de stores ou volets pour lesquels l'actionneur électromécanique est inséré dans un tube d'enroulement du store ou du volet.

De façon avantageuse, les aimants permanents sont réalisés sous forme de tuiles et collés sur le corps de rotor qui est cylindrique.

Avantageusement, le rotor comprend quatre ou huit aimants permanents en forme de tuiles répartis sur la périphérie du corps cylindrique, alors que le stator comprend six pôles. De plus, les éléments magnétiques sont de préférence divisés en au moins deux parties sur la longueur du corps cylindrique. Les aimants sont ainsi plus simples à fabriquer.

De façon avantageuse, les éléments magnétiques sont des aimants anisotropes formés par un procédé de pressage humide. Ainsi, les aimants du rotor sont obtenus avec une direction préférée de magnétisation. Leur performance est plus importante et les aimants sont plus stables dans le temps, c'est-à-dire qu'ils sont moins susceptibles d'être démagnétisés. Selon une caractéristique préférée de l'invention, ces éléments magnétiques sont usinés après moulage.

Dans un mode de réalisation préféré, le noyau de stator est formé par un empilement de tôles, alors que les éléments polaires du noyau de stator comprennent, en extrémité d'une dent en saillie vis-à-vis de la paroi périphérique du stator, un épanouissement dont la largeur est variable le long de l'axe de rotation, sur la longueur de l'empilement de tôles.

De façon avantageuse, cet actionneur électromécanique peut incorporer une ou plusieurs des caractéristiques suivantes, prise dans toute combinaison techniquement admissible :

- La paroi périphérique du stator est circulaire, fermée et obtenue à partir d'un empilement de tôles formant chacune une circonférence fermée.
- La puissance massique de l'actionneur électromécanique est inférieure à 65 watts par kilogramme.
- L'actionneur comprend des flasques en matière isolante sur lesquels sont connectées les extrémités des bobinages du stator.
- L'actionneur comprend des flasques métalliques assemblés de part et d'autre du corps de stator et supportant le rotor au moyens de paliers ou roulements.

Selon la revendication 14, l'invention vise une installation domotique de fermeture ou de protection solaire comprenant un écran enroulable sur un tube d'enroulement ou un écran comprenant des cordons de déploiement s'enroulant sur un arbre d'entraînement, le tube d'enroulement ou l'arbre d'entraînement étant entraîné en rotation par un actionneur électromécanique tel que mentionné ci-dessus.

D'autres particularités et avantages de l'invention apparaîtront encore dans la description ci-après. Aux dessins annexés, donnés à titre d'exemples non limitatifs :

- la figure 1 est une coupe schématique transversale d'une installation domotique conforme à un premier mode de réalisation de l'invention et comprenant un store enroulable ;
- la figure 2 est une vue schématique en perspective d'une installation domotique conforme à un second mode de réalisation de l'invention et comprenant un volet roulant ;
- la figure 3 est une coupe schématique longitudinale d'un tube d'enroulement appartenant à l'une des installations des figures 1 et 2 et comprenant un actionneur électromécanique conforme à un mode de réalisation de l'invention ;
- la figure 4 est une coupe longitudinale d'un moteur électrique de l'actionneur électromécanique de la Fig.3, ce moteur électrique étant de type à courant continu sans balais à commutation électronique ;
- la figure 5 est une coupe transversale du moteur électrique de la figure 4 ;
- la figure 6 est une vue schématique d'un circuit imprimé supportant des capteurs et utilisé dans le moteur des figures 4 et 5 ; et
- la figure 7 est une vue schématique en perspective du stator du moteur électrique des figures 4 et 5.

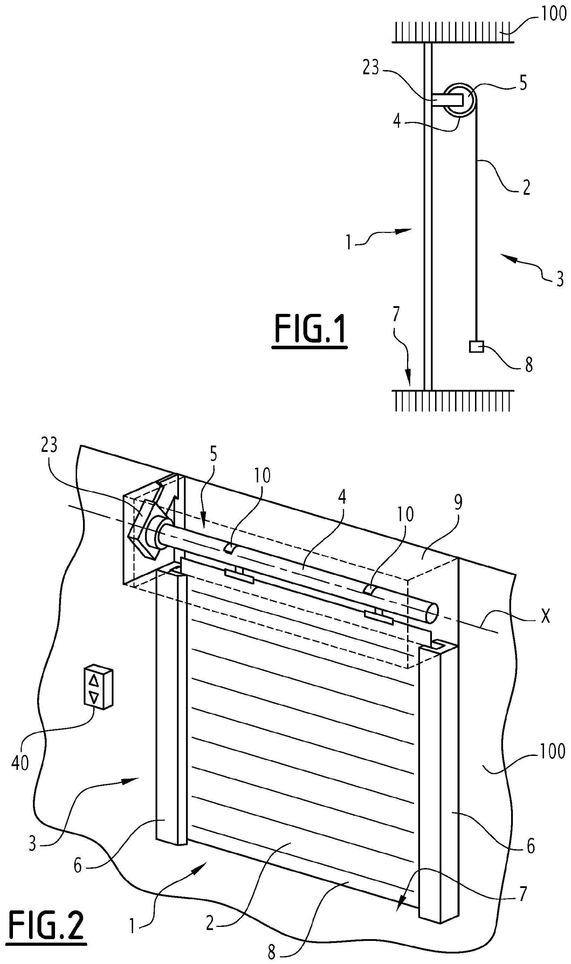

On décrit tout d'abord, en référence aux figures 1 et 2, deux installations domotiques conformes à l'invention et installées chacune dans un bâtiment 100 comportant une ouverture 1, fenêtre ou porte, équipée d'un écran 2 appartenant à un dispositif d'occultation 3, en particulier un store motorisé ou un volet motorisé.

Le dispositif d'occultation 3 peut être un store, notamment en toile, enroulable, tel que représenté en figure 1, un store plissé ou à lames, ou un volet, tel que représenté en figure 2.

On va décrire, en référence respectivement aux figures 1 et 2, un store enroulable et un volet conformes à des modes de réalisation de l'invention.

Dans le premier mode de réalisation illustré à la figure 1, l'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse. Le dispositif d'occultation 3 comprend un support 23 de l'écran 2, ainsi que le tube d'enroulement 4 pour enrouler l'écran 2.

De manière connue, le store enroulable du dispositif d'occultation 3, comporte une toile, formant l'écran 2 du store enroulable 3. Une première extrémité de l'écran 2, en l'espèce l'extrémité supérieure de l'écran 2 dans la configuration assemblée du dispositif d'occultation 3 dans l'installation domotique, est fixée au tube d'enroulement 4. De plus, une deuxième extrémité de l'écran 2, en l'espèce l'extrémité inférieure de l'écran 2 dans la configuration assemblée du dispositif d'occultation 3 dans l'installation domotique, est fixée à une barre de charge 8, dont le poids exerce une tension sur l'écran 2. Sur la figure 1, la toile formant l'écran 2 est réalisée à partir d'un matériau textile.

De manière connue, la première extrémité de l'écran 2 est fixée au tube d'enroulement 4, notamment sur toute la longueur du tube d'enroulement 4, de sorte à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre le support 23 de l'écran 2 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2. L'installation représentée à la figure 1 ne comporte pas de caisson et la toile formant l'écran 2, enroulée sur le tube d'enroulement 4, est visible.

Dans le second mode de réalisation illustré à la figure 2, l'écran 2 appartient à un volet roulant 3 qui comporte un tablier comprenant des lames horizontales articulées les unes aux autres, formant l'écran 2 du volet roulant 3, et guidées par deux glissières latérales 6. Ces lames sont jointives lorsque l'écran 2 atteint sa position basse déroulée. La lame supérieure de l'écran 2 est accrochée au tube d'enroulement 4 par deux attaches 10.

Dans ce cas, la position haute enroulée correspond à la mise en appui d'une lame d'extrémité finale 8 en forme de L du tablier 2 du volet roulant 3 contre un bord d'un caisson 9 du volet roulant 3, alors que la position basse déroulée correspond à la mise en appui de la lame d'extrémité finale 8 du tablier 2 du volet roulant 3 contre un seuil 7 de l'ouverture 1.

Le tube d'enroulement 4 est disposé à l'intérieur du caisson 9 du volet roulant 3. Le tablier 2 s'enroule et se déroule autour du tube d'enroulement 4 et est logé au moins en partie à l'intérieur du caisson 9. De manière générale, le caisson 9 est disposé au-dessus de l'ouverture 1, ou encore en partie supérieure de l'ouverture 1. Le caisson 9 fait partie intégrante du dispositif de maintien de l'écran 2.

Le dispositif d'entraînement motorisé 5 est commandé par une unité de commande 40. L'unité de commande 40 peut être, par exemple, une unité de télécommande locale, comme visible à la figure 2, ou une unité de commande centrale, non représentée. L'unité de commande centrale pilote éventuellement l'unité de commande locale, ainsi que d'autres unités de commande locales similaires et réparties dans le bâtiment 100.

L'unité de commande centrale peut être en communication avec une station météorologique, à l'intérieur ou à l'extérieur du bâtiment 100, incluant notamment, un ou plusieurs capteurs pouvant être configurés pour déterminer, par exemple, une température, une luminosité, ou encore une vitesse de vent dans le cas d'une station météorologique extérieure.

Une unité de commande comparable, non représentée, est utilisée dans le premier mode de réalisation.

A la figure 2, seul un support d'écran 23 est représenté. En pratique, l'installation comprend de préférence un support d'écran 23 à chaque extrémité du tube d'enroulement 4.

Le dispositif d'entraînement motorisé 5 est, de préférence, configuré pour exécuter les commandes de déroulement ou d'enroulement de l'écran 2 du dispositif d'occultation 3, pouvant être émises, notamment, par une unité de commande locale ou centrale.

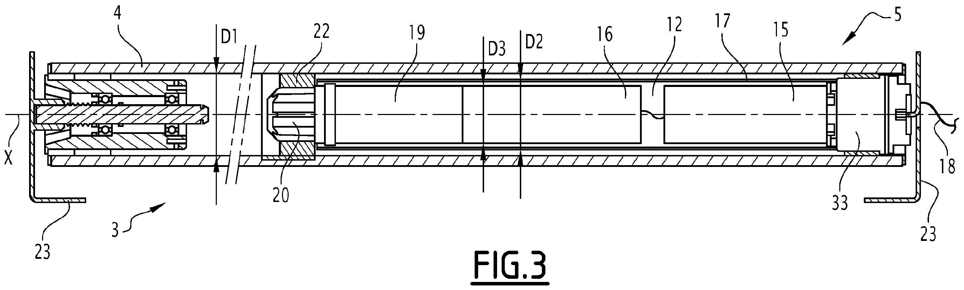

La figure 3 est une coupe longitudinale d'un dispositif d'entraînement motorisé 5 qui peut être soit celui de l'installation de la figure 1, soit celui de l'installation de la figure 2. Ce dispositif d'entraînement motorisé 5 comprend un actionneur électromécanique 12, de type tubulaire, configuré pour mettre en rotation le tube d'enroulement 4, de sorte à dérouler ou enrouler l'écran 2 du dispositif d'occultation 3. Dans l'état monté, l'actionneur électromécanique 12 est inséré dans le tube d'enroulement 4. Pour cela, le diamètre intérieur $D1$ du tube d'enroulement 4 est sensiblement supérieur au diamètre externe $D2$ de l'actionneur électromécanique 12, de sorte que l'actionneur électromécanique 12 peut être inséré dans le tube d'enroulement 4, lors de l'assemblage du dispositif d'occultation 3. Selon un autre mode de réalisation, l'actionneur électromécanique intègre un moteur électrique cylindrique, mais son carter est de section carrée ou rectangulaire et celui-ci est inséré dans un rail à section similaire, ouvert sur un côté. L'actionneur entraîne alors un arbre d'entraînement sur lequel s'enroulent des cordons de déploiement de l'écran.

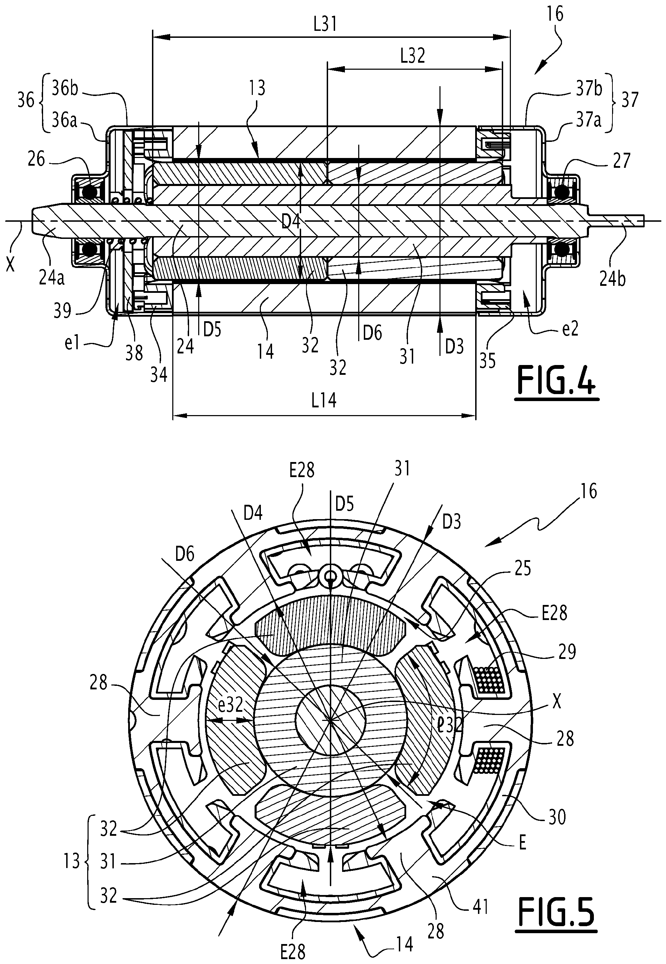

L'actionneur électromécanique 12 comprend un moteur électrique 16. Le moteur électrique 16 comprend un rotor 13 et un stator 14, représentés schématiquement en figures 4 et 5 et positionnés de manière coaxiale autour d'un axe de rotation X, qui est également l'axe de rotation du tube d'enroulement 4 ou de l'arbre d'entraînement en configuration montée du dispositif d'entraînement motorisé 5. On note $D3$ le diamètre extérieur du moteur électrique 16, ce diamètre étant, en pratique, égal au diamètre extérieur du stator 14. Par la suite, seul le mode de réalisation d'un actionneur électromécanique tubulaire sera décrit, mais les enseignements s'appliquent par analogie au cas d'un actionneur électromécanique d'un écran, dont le carter est non cylindrique.

Des moyens de commande de l'actionneur électromécanique 12, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 12 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend notamment un module non représenté de réception d'ordres de commande, les ordres de commande étant émis par un émetteur d'ordres, tel que la télécommande 40. Préférentiellement, le module de réception d'ordres de commande de l'unité électronique de contrôle 15 est de type sans fil. En particulier, ce module 47 est configuré pour recevoir des ordres de commande radioélectriques. Le module de réception d'ordres de commande peut également permettre la réception d'ordres de commande transmis par des moyens filaires.

Les moyens de commande de l'actionneur électromécanique 12 comprennent des moyens matériels et/ou logiciels. A titre d'exemple nullement limitatif, les moyens matériels peuvent comprendre au moins un microcontrôleur.

Ici, l'actionneur électromécanique 12 comprend un câble d'alimentation électrique 18 permettant son alimentation en énergie électrique depuis le secteur ou depuis une batterie (non représentée). Le carter 17 de l'actionneur électromécanique 12 est, préférentiellement, de forme cylindrique. Dans un mode de réalisation, le carter 17 est réalisé dans un matériau métallique. La matière du carter 17 de l'actionneur électromécanique 12 n'est nullement limitative. Elle peut être différente. Le carter peut, en particulier, être en matière plastique.

L'actionneur électromécanique 12 comprend également un dispositif de réduction à engrenages 19 et un arbre de sortie 20. L'actionneur électromécanique 12 peut également comprendre un dispositif de détection de fin de course et/ou d'obstacle, qui peut être mécanique ou électronique. Avantageusement, le moteur électrique 16 et le dispositif de réduction à engrenages 19 sont disposés à l'intérieur du carter 17. Le diamètre $D3$ du moteur électrique est inférieur au diamètre $D2$ de l'actionneur (égal au diamètre externe du carter 17), pour être inséré dans le carter 17 de ce dernier, le diamètre $D2$ de l'actionneur électromécanique 12 étant inférieur au diamètre $D1$ du tube d'enroulement 4 dans lequel l'actionneur électromécanique 12 doit être inséré. En pratique, pour que l'actionneur 12 puisse être logé dans un tube d'enroulement 4 dont le diamètre $D1$ est de 40 mm, le diamètre $D3$ est inférieur à 40 mm, de préférence inférieur à 36 mm. L'arbre de sortie 20 de l'actionneur électromécanique 12 est disposé à l'intérieur du tube d'enroulement 4 et au moins en partie à l'extérieur du carter 17.

L'arbre de sortie 20 de l'actionneur électromécanique 12 est accouplé par un moyen de liaison 22 au tube d'enroulement 4, en particulier un moyen de liaison 22 en forme de roue.

Ici, le carter 17 de l'actionneur électromécanique 12 est fixé au support 23, en particulier à une patte de support fixée d'une part sur une structure fixe et d'autre part sur une tête 33 de l'actionneur électromécanique 12.

Ici, et tel qu'illustré à la figure 3, l'unité électronique de contrôle 15 est disposée à l'intérieur du carter 17 de l'actionneur électromécanique 12. Ainsi, l'unité électronique de contrôle 15 est intégrée à l'intérieur du carter 17 de l'actionneur électromécanique 12.

Dans un autre mode de réalisation, l'unité électronique de contrôle 15 est disposée au moins partiellement à l'extérieur du carter 17 de l'actionneur électromécanique 12 et, en particulier, montée sur le support 23 ou dans le caisson 9.

On décrit à présent, plus en détail et en référence aux figures 4 et 5 le moteur électrique 16 de l'actionneur électromécanique 12.

Le moteur électrique 16 de l'actionneur électromécanique 12 est de type à courant continu sans balais à commutation électronique (ou moteur BLDC, selon l'acronyme Anglais pour « BrushLess Direct Current »).

Le rotor 13 comprend un corps de rotor 31 muni d'éléments magnétiques 32 entourés par le stator 14. Les éléments magnétiques 32 sont disposés sur la circonférence extérieure du corps de rotor 31. Les éléments magnétiques 32 du rotor 13 sont des aimants permanents en ferrite.

Les éléments magnétiques 32 sont séparés du stator 14 par un entrefer 25, radial par rapport à l'axe de rotation X.

On note e32 l'épaisseur radiale des éléments magnétiques 32, qui est mesurée selon une direction radiale à l'axe X. Cette épaisseur e32 est choisie supérieure à 3 mm, de préférence entre 3,8 et 4,2 mm, ce qui contribue à fournir les efforts électromagnétiques nécessaires au fonctionnement du moteur, participe à la faisabilité industrielle des aimants permanents et limite les risques de démagnétisation de ceux-ci.

Les éléments magnétiques ou aimants permanents 32 peuvent être rapportés sur la circonférence extérieure du corps de rotor 13 par collage, surmoulage ou toute autre technique connue.

On note respectivement D5 le diamètre extérieur du rotor 13 et D6 le diamètre extérieur du corps du rotor 31. Le diamètre D5 est supérieur ou égal à la moitié du diamètre D3.

Le corps de rotor 31 est relié solidairement en rotation à un arbre de rotor 24. L'arbre de rotor 24 est centré sur l'axe de rotation X et dépasse de part et d'autre du corps de rotor 31. Ainsi, l'arbre de rotor 24 comprend une première et une deuxième extrémités 24a, 24b en saillie par rapport au corps de rotor 31. Avantageusement, le corps de rotor 31 est formé à partir d'un empilage de tôle.

Dans un autre mode de réalisation, le corps de rotor 31 est réalisé par un arbre massif. Dans un autre mode de réalisation correspondant au cas d'un rotor creux, le corps de rotor 31 est réalisé en forme de cloche emboutie.

On note L31 la longueur axiale du corps de rotor 31, qui est mesurée parallèlement à l'axe X. La longueur axiale L31 est au moins égale à 1,5 fois le diamètre D5 extérieur du rotor 31, de préférence au moins égale à 2, voire 3 fois le diamètre D5 ce qui contribue à la forme tubulaire de l'actionneur insérable dans un tube d'enroulement. Cette longueur axiale peut être plus grande que la longueur axiale L14 du stator 14, qui est également mesurée parallèlement à l'axe X. En pratique, les longueurs axiales L14 et L31 ont des valeurs relativement proches, en ce sens que leur rapport L14/L31est compris entre 0,8 et 1,2, de préférence entre 0,9 et 1,1.

Les extrémités 24a, 24b du corps de rotor 31 sont maintenues au niveau de flasques métalliques 36, 37 par des paliers ou roulements 26, 27. Avantageusement, un ressort spirale 39 contraint le positionnement axial du corps de rotor 31 entre les deux flasques 36, 37.

Les éléments magnétiques 32 sont des aimants en forme de tuiles. Ces tuiles doivent être réparties de manière régulière sur la surface extérieure du corps de rotor 31. Une irrégularité dans le positionnement des tuiles pourrait conduire à la génération de bruit. Ces tuiles ne sont pas jointives. Leur forme doit donc respecter certaines contraintes, pour éviter qu'elles ne se touchent.

On note L32, la longueur axiale d'un élément magnétique 32, qui est mesurée parallèlement à l'axe X. On note, par ailleurs, ℓ32 la largeur d'un élément magnétique 32 qui est mesurée selon une direction circonférentielle par rapport à l'axe X, à mi-distance entre les surfaces radiales interne et externe de cet élément. Ainsi, en considérant que l'épaisseur e32 est comprise entre 3,8 et 4,2 mm comme envisagé ci-dessus, la largeur ℓ32 peut être comprise entre 12 mm et 12,6 mm, alors que la longueur L32 est comprise entre 20 mm et 40 mm, de préférence entre 24 et 34 mm. Ceci confère aux aimants 32 une forme compatible avec la plupart des géométries de rotor 13. Ces plages de valeurs permettent d'assurer la faisabilité industrielle des aimants. L'épaisseur radiale des aimants peut ne pas être constante, l'épaisseur maximale se situant alors au centre de la section d'un aimant, prise transversalement à l'axe de rotation du moteur électrique

Dans un exemple préféré, le rapport e32/L32, pour des valeurs de longueur L32 entre 24 et 34 mm, est compris entre $3,8/34 \approx 0,11$ et $4,2/24 = 0,175$ dans l'exemple. En pratique, ce rapport est choisi inférieur à 0,2, de préférence inférieur ou égal à 0,18. Dans le mode de réalisation préféré, on utilise quatre aimants formant chacun un élément magnétique 32 et répartis autour du corps de rotor 31, formant ainsi un rotor 13 à quatre pôles.

Il serait techniquement possible de n'utiliser que deux aimants répartis autour du corps de rotor 31, formant ainsi un rotor 13 à deux pôles, mais il faudrait dans ce cas adapter le stator 14 à six pôles. Les performances pour un rapport de pôles 2/6 pour le rotor 13 et le stator 14 sont moins bonnes que pour un rapport 4/6. De plus, l'utilisation de seulement deux aimants nécessiterait d'obtenir des aimants de section plus incurvée ou de réduire leur largeur, c'est-à-dire la couverture par les aimants sur le périmètre du rotor 13.

En revanche, il est avantageux d'utiliser avec le même rotor 14 huit aimants 32 répartis autour du corps 31.

Actuellement, pour un aimant d'épaisseur radiale e32 comprise entre 3 et 4 mm, la longueur maximum disponible est de 40mm. Le besoin en longueur est au maximum de 61,1 mm pour un moteur électrique 16 destiné à être utilisé avec un tube d'enroulement 4 de diamètre intérieur D1 égal à 40 mm. On peut couvrir ce besoin en longueur en associant plusieurs aimants les uns à la suite des autres, en particulier deux aimants, sur la longueur du corps du rotor 31 pour former un élément magnétique 32, comme visible à la figure 4. Dans ce cas, les éléments magnétiques 32 sont divisés en au moins deux parties sur la longueur L31 du corps 31.

Dans un autre mode de réalisation, les éléments magnétiques 32 sont réalisés sous forme d'un anneau en ferrite polarisé. A l'heure actuelle, un tel anneau offre des performances sensiblement équivalentes aux aimants tuiles, à épaisseur comparable. Il est cependant plus difficile à fabriquer dans les longueurs requises pour cette application, à savoir autour de 60 mm. Cependant, il reste possible d'assembler plusieurs anneaux l'un à la suite de l'autre, tout en veillant à indexer les secteurs polarisés.

La polarisation de l'anneau peut être une polarisation à 2, 4, 6 ou 8 pôles. De manière préférentielle, l'anneau polarisé peut avoir une épaisseur plus importante que celle des aimants tuiles, ceci en réduisant le diamètre D6 du corps de rotor 31. L'aimant lui-même est alors plus onéreux, mais cela simplifie la production et le coût du corps de rotor 31. De plus, le gain en volume d'aimant permet, dans ce cas, de maximiser les performances du moteur électrique 16.

A l'heure actuelle, la solution avec plusieurs aimants tuiles 32 répartis à la périphérie du corps du rotor 31 est toutefois préférée car elle permet d'obtenir des valeurs de champ rémanent Br au sein du moteur 16 qui sont supérieures aux valeurs associées à des aimants sous forme d'anneau polarisé radialement. Ce champ rémanent Br est de l'ordre de 0,43 Tesla, voire de l'ordre de 0,45 Tesla pour les aimants en forme de tuiles, ce qui est bien adapté aux valeurs souhaités pour une application dans le cadre d'un actionneur 12 pour dispositif d'occultation 3. Actuellement ; les anneaux magnétiques en ferrite ne permettent pas d'atteindre que des valeurs de champ rémanent Br inférieures à 0,42, ce qui n'est pas optimal. Ceci peut évoluer, ce qui rendrait cette deuxième solution plus attractive.

La valeur minimale du diamètre D5 qui peut être obtenue est déterminée par la technologie et la géométrie des aimants 32 rapportés sur le corps de rotor 31. La largeur ℓ32 des aimants 32, mesurée selon une direction orthoradiale à l'axe X, dimensionne la valeur minimale du diamètre D5. Si on réduit le diamètre D6 du corps du rotor 31, on est obligé de réduire la largeur maximale des aimants tuiles 32 pour éviter que les aimants ne se touchent ou que les secteurs polarisés n'aient une forme trop triangulaire, dans le cas d'un rotor à anneau polarisé. Par ailleurs, le volume de chaque aimant 32 contribue à la performance de l'actionneur 12. Un aimant de section trapézoïdale n'a pas d'intérêt en termes de performance et il induit un risque plus important de démagnétisation au niveau de ses parties plus fines.

En termes de performances et pour limiter les risques de démagnétisation, pour des aimants tuiles, un volume important, notamment une section de forme sensiblement rectangulaire, autrement dit de largeur sensiblement constante sur l'épaisseur de l'aimant est la solution la meilleure. Ainsi, de manière avantageuse, puisqu'il est nécessaire de maximiser le diamètre D5 extérieur du rotor 13 pour répondre à ces contraintes, il est possible de réutiliser au moins certaines parties d'un rotor 13 adapté pour des moteurs électriques 16 dont le diamètre D3 est plus important, par exemple des moteurs électriques 16 adaptés à être insérés dans des tubes d'enroulement 4 dont le diamètre intérieur D1 est de 50mm, ou compris entre 42 et 50mm.

Le stator 14 est formé par un noyau de stator 41 en matériau magnétisable, plus spécifiquement en matériau ferromagnétique, qui est généralement formé par un empilage, ou paquet, de tôles et muni de garnitures isolantes. Le noyau de stator 41 comprend des éléments polaires 28 répartis sur une paroi périphérique 30 du noyau de stator 41, en pratique sur l'intérieur de la paroi périphérique 30 du noyau de stator 41, c'est-à-dire sur le côté de la paroi périphérique 30 orienté vers l'axe X. Le stator 14 est obtenu à partir d'un noyau de stator 41 comprenant un empilement de tôles formant chacune une circonférence fermée, sur lequel est rapporté un ensemble de bobinage, et non par un ensemble de secteurs, à une ou plusieurs dents, bobinés qui, par leur assemblage, forment la circonférence fermée du noyau de stator 41. Les faibles dimensions du moteur électrique 16 ne permettent pas de produire le stator 14 par assemblage de plusieurs secteurs angulaires bobinés.

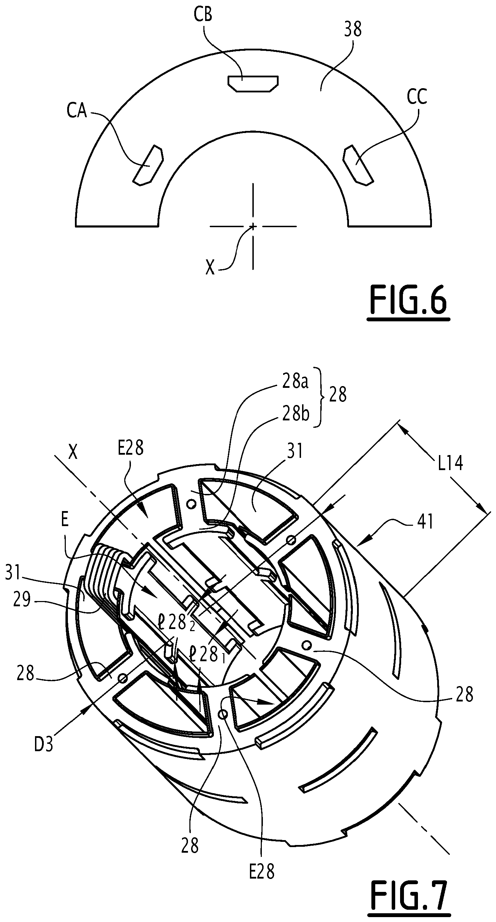

Aux figures 5 et 7, un seul bobinage 29 est représenté en place autour d'un seul élément polaire 28, pour la clarté du dessin.

Les éléments polaires 28 du noyau 41 sont en saillie vers l'intérieur du moteur électrique 16, à partir de la paroi périphérique 30. Avantageusement, ils sont au nombre de six, uniformément répartis sur la paroi périphérique 30, formant ainsi un stator 14 à six pôles. On appelle encoche l'espace E28 formé entre deux éléments polaires 28 adjacents. Des bobinages 29 sont positionnés dans les encoches, autour des éléments polaires 28 du stator 14. Plus précisément, chaque élément polaire 28 est entouré par un bobinage 29 qui lui est propre. Ces bobinages 29 sont tels qu'ils ont le même nombre de spires par élément polaire. Les bobinages 29 des éléments polaires diamétralement opposés sont reliés au niveau des extrémités du noyau de stator 14 pour former une phase. Les six bobinages 29 étant reliés deux à deux, le stator 14 comprend donc trois phases, formant en particulier une configuration en étoile. Les bobinages 29 sont reliés de sorte que, lorsqu'ils sont parcourus par un courant, ils produisent un champ magnétique tournant qui entraîne en rotation le rotor 13. Les bobinages 29 sont isolés électriquement du noyau de stator 41 par un élément isolant. Cet élément isolant est une feuille de « papier » en Nomex ou Mylar (marques déposées), qu'on utilise également dans le même but sur les moteurs asynchrones en particulier sur des versions de moteurs électriques dont la tension de fonctionnement est proche de 230V. Cet élément isolant est visible uniquement sur la figure 7, dans chaque espace E28, avec la référence 31. Une isolation n'est pas forcément nécessaire sur les versions de moteurs très basse tension, dits TBT, dont la tension d'alimentation est voisine de 12V.

De manière avantageuse, les éléments polaires 28 du noyau de stator 41 comprennent, en extrémité d'une dent 28a en saillie vis à vis de la paroi périphérique 30 du stator 14, un épanouissement 28b dont la largeur est variable, le long de l'axe X, dans l'empilement de tôles formant le noyau de stator 41.

Les épanouissements ou isthmes 28b d'une première largeur $\ell 28_1$, dit « courts », sont favorables à une réduction des efforts magnétiques dans le moteur électrique 16 et donc, par extension, à une possible réduction du bruit que produit le moteur électrique 16.

De leur côté, les épanouissements ou isthmes 28b d'une deuxième largeur $\ell 28_2$ supérieure à la première largeur, dits « longs », permettent d'obtenir un espace de bobinage maximal par la création d'une surface d'encoche maximale et sont donc favorables à l'optimisation du remplissage de l'encoche E28 adjacente par le cuivre d'un bobinage 29.

En répartissant judicieusement, sur la longueur du stator 14, les éléments polaires 28 présentant des épanouissements courts et longs, on optimise à la fois la réduction des efforts magnétiques et donc le bruit généré, et la puissance produite par le moteur.

En particulier, la présence d'épanouissements longs en nombre largement inférieur au nombre d'épanouissements courts sur la longueur du stator 14 permet de limiter le bruit généré par le moteur électrique 16. La répartition régulière ou non des épanouissements longs intercalés avec des épanouissements courts permet de maintenir les éléments isolants 31 dans leurs encoches respectives E28. Le maintien des spires d'un bobinage 29 dans une encoche est alors en partie réalisé par l'élément isolant 31 placé dans l'encoche et formant la surface d'encoche. Les épanouissements longs 28b permettent de rigidifier l'élément isolant au niveau de l'ouverture de chaque encoche, entre deux éléments polaires et ainsi de maintenir les spires du bobinage 29.

L'empilement de tôles est préférentiellement constitué d'éléments polaires à épanouissement court, sauf dans les zones de plus forte contrainte mécanique des fils des bobinages 29, c'est-à-dire à chaque extrémité et au milieu de l'empilement, où les éléments polaires ont des épanouissements longs, comme illustré en figure 7. Selon un exemple de réalisation, l'empilement de tôles comprend un ou deux épanouissements longs 28b à chaque extrémité du paquet de tôles ainsi qu'un ou deux épanouissements longs 28b au milieu du paquet de tôles. Les autres épanouissements sont courts.

Dans le cas présent, la pièce formant la paroi périphérique 30 du noyau de stator 41 forme, dans le même temps, la culasse du stator. Aucune pièce de rebouclage du flux ne nécessite d'être rapportée après le bobinage.

La pièce formant le stator 14 est une pièce formée par des plaques de tôles formant sensiblement un cercle complet, comme illustrée en figure 7. Cette configuration oblige à réaliser les bobinages 29 par une méthode dite « à aiguilles ».

Selon cette méthode, un fil conducteur isolé, par exemple un fil de cuivre émaillé, qui se déroule d'une réserve, par exemple d'une bobine, est bobiné successivement autour de chaque élément polaire 28 du stator 14, grâce à un support d'aiguilles.

Le support d'aiguille comprend une navette ou tête de bobinage, montée à l'extrémité d'un arbre horizontal creux, animé d'un mouvement de va-et-vient le long de l'axe de rotation X du rotor 13. A l'intérieur de cette tête de bobinage peuvent glisser une ou plusieurs aiguilles de bobinage, le nombre d'aiguilles correspondant au nombre de bobinages 29 à enrouler simultanément. Chacune de ces aiguilles est tubulaire et comporte un canai axial par lequel passe le fil isolé à bobiner. Chaque aiguille comporte une partie courbe présentant un rayon de courbure approprié, qui coopère avec une partie droite.

Le support d'aiguilles exécute, dans le sens de l'axe de rotation X du moteur électrique 16, un mouvement de va-et-vient à travers l'alésage intérieur du paquet de tôles du stator 14. Dans ses deux positions de point mort, il tourne dans un sens ou dans l'autre d'une quantité qui correspond à la largeur du bobinage 29 à réaliser, opération au cours de laquelle le fil isolé du bobinage 29 est guidé d'un côté à l'autre de l'élément polaire 28 sur lequel doit être réalisé le bobinage 29. Le fil isolé est tiré chaque fois, lors du mouvement du support d'aiguilles à la largeur du bobinage 29, pour la formation de la développante du bobinage 29, par-dessus l'élément polaire 28, et étant mis en place dans l'encoche E28 prévue pour le recevoir entre l'élément polaire 28 sur lequel il est bobiné et un élément polaire 28 adjacent. Le mouvement du support d'aiguille est donc une combinaison entre un mouvement rotatif alternatif et un mouvement de translation axiale.

Le fil isolé du bobinage 29 suit donc d'une façon sensiblement précise le chemin que l'aiguille de bobinage accomplit dans son mouvement le long des côtés et par-dessus l'élément polaire à bobiner, et les différentes parties du fil isolé du bobinage 29 qui forment le bobinage 29 de part et d'autre de élément polaire 28 se placent dans l'espace précité, destiné à le recevoir, de façon à être parallèles les unes aux autres.

Par ailleurs, des flasques 34, 35 en matière isolante sont rapportés aux deux extrémités du stator 14. Ceux-ci permettent notamment de maintenir les bobinages 29 en place, d'assurer la connectique des extrémités des fils bobinés et d'isoler les extrémités du stator 14. Alternativement, la connectique des extrémités des fils bobinés est réalisée directement sur un circuit imprimé, non représenté, de l'actionneur électromécanique 12. Par-dessus ces flasques isolants 34, 35 sont rapportés les flasques métalliques 36, 37, en forme de cloche, assemblés par collage ou soudage sur les tôles formant le noyau de stator 41. Les flasques métalliques 36, 37 comprennent une paroi de fond 36a, 37a ainsi qu'une paroi latérale 36b, 37b en continuité de la paroi périphérique 30 du noyau de stator 41, cette paroi périphérique 30 étant de section circulaire et ayant une forme cylindrique. Ils sont réalisés à partir d'une tôle emboutie. Ces flasques métalliques 36 et 37 permettent de maintenir les roulements ou paliers 26, 27 supportant le rotor 13 et augmentent la rigidité de l'ensemble moteur électrique 16. Ces flasques 36 et 37 peuvent également être réalisés en matière plastique. Toutefois, la fabrication des flasques 36 et 37 en métal leur confère une raideur et une masse plus importantes que lorsqu'ils sont en matière plastique et assure une bonne précision géométrique.

Le stator 14 définit un espace interne E cylindrique à section circulaire dans lequel le rotor 13, y compris les éléments magnétiques 32, est positionné et à l'intérieur duquel le rotor 13 est en rotation lorsque le moteur électrique 16 fonctionne. Le diamètre D4 est donc le diamètre intérieur du stator 14. Le diamètre D4 de l'espace interne E cylindrique est tel que cet espace interne E cylindrique reçoit le rotor 13 ainsi que les éléments magnétiques 32, avec un entrefer d'épaisseur radiale non nulle entre ces éléments magnétiques 32 et les éléments polaires 28. La partie magnétique ou magnétisée du rotor 13 se trouvant à l'intérieur de l'espace cylindrique E interne au stator 14, le rotor 13 est qualifié de rotor interne. On rappelle ici que D3 correspond au diamètre extérieur du stator 14.

On note R1 le rapport entre les diamètres D3 et D4. On a donc la relation :

$$R1 = D3/D4 \qquad\qquad (\text{équation 1})$$

Par construction, le rapport R1 est strictement supérieur à 1 puisque le diamètre D3 est nécessairement plus grand que le diamètre D4. La valeur du rapport R1 est choisie inférieure à 1,7, ce qui signifie que l'espace cylindrique interne E au stator 14 occupe un volume relativement important, en comparaison au volume total du moteur 16. Ceci laisse relativement peu de place pour positionner les éléments polaires 28 et les bobinages 29. Les bobinages 29 ont donc un nombre de spires relativement limité, ce qui impose d'augmenter la longueur du moteur 16, donc sa masse pour fournir la puissance nécessaire au fonctionnement de l'actionneur pour le déploiement et repli d'un écran, tel qu'un store ou un volet. En conséquence, la puissance massique du moteur 16, donc de l'actionneur 12, est diminuée par rapport à un cas où le rapport R1 serait supérieur à 1,7.

De préférence, ce rapport R1 est choisi inférieur à 1,6, voire même inférieur à 1,58, ce qui permet d'augmenter encore l'effet mentionné ci-dessus, tout en restant dans des limites de faisabilité et de couple à fournir pour les applications aux écrans d'une installation domotique.

On note par ailleurs R2 le rapport de la longueur axiale L14 du stator 14 sur le diamètre extérieur D3 du stator 14. On a donc la relation :

$$R2 = L14/D3 \qquad\qquad (\text{équation 2})$$

La valeur du rapport R2 est choisie supérieure à 1,5, de préférence supérieure à 2, de préférence encore supérieure à 3, ce qui signifie que le moteur 16, donc l'actionneur 12 sont sensiblement plus longs que larges. Ceci est adapté à une installation au sein d'un tube d'enroulement, tel que le tube 4. La valeur de ce rapport R2 permet d'obtenir une longueur totale des enroulements 29 adaptée pour générer un couple suffisant pour entraîner un tube d'enroulement 4, malgré la valeur relativement faible du rapport R1 tout en assurant la faisabilité industrielle du bobinage du stator 14.

De part et d'autre de l'espace cylindrique E sont montés le premier palier 26 et le deuxième palier 27 de support en rotation de l'arbre de rotor 24. Ainsi, l'arbre de rotor 24 est monté en rotation au niveau de ses deux extrémités 24a et 24b par l'intermédiaire des deux paliers 26, 27.

Ici, la première extrémité 24a de l'arbre de rotor 24 est en contact avec le premier palier 26, tandis que la deuxième extrémité 24b de l'arbre de rotor 24 est en contact avec le deuxième palier 27. Les premier et deuxième paliers 26, 27 sont ainsi positionnés de part et d'autre du corps de rotor 31 suivant l'axe de rotation X. Le premier palier 26 ou le deuxième palier 27 peut prendre la forme d'un roulement à billes ou d'un coussinet.

Dans un autre mode de réalisation, le moteur électrique 16 comprend un seul palier supportant l'arbre de rotor 24.

Les premier et deuxième paliers 26, 27 sont logés dans un renfoncement de la paroi de fond 36a, 37a des flasques métalliques 36, 37 du moteur électrique 16.

De manière avantageuse, les deux flasques isolants 34, 35 sont identiques. De la même manière, les deux flasques métalliques 36, 37 sont identiques. Entre un flasque isolant 34, 35 et un flasque métallique 36, 37 sont ménagés des espace latéraux e1 et e2. Autrement dit, un espace latéral est aménagé entre l'extrémité des bobinages 29, c'est-à-dire l'extrémité axiale du stator 14, et la paroi de fond 36a, 37a de chaque flasque métallique 36, 37.

Dans un de ces espaces latéraux e1 ou e2 est logé un circuit imprimé 38 et/ou le ressort spirale 39 de contrainte du rotor 13 vis-à-vis du stator 14. Le circuit imprimé 38 fait partie de l'unité électronique 15 du moteur électrique 16.

En particulier, le circuit imprimé 38 de l'unité électronique de contrôle 15 comprend des capteurs CA, CB, CC, par exemple des capteurs à effet Hall, qui permettent de repérer le passage des éléments magnétiques 32 lors de la rotation du rotor 13. Ces capteurs sont placés de manière à obtenir un déphasage prédéfini entre la force électromotrice ou « fem » du moteur et les capteurs, à 0° ou 30° par exemple. Ces informations sont traitées par une unité électronique de traitement non représentée, afin de déterminer la position angulaire du rotor 13 par rapport aux bobinages 29. Ces capteurs CA, CB, CC sont positionnés à proximité de l'extrémité axiale du stator 14, pour détecter les variations de flux provoquées par le passage des aimants 32 du rotor 13.

Du fait de la contrainte de diamètre D3 du moteur électrique 16 et des éléments le composant, à savoir le rotor 13, son corps 31 et ses éléments magnétiques 32 et le stator 14, les capteurs CA, CB, CC ne peuvent pas être positionnés de manière radiale par rapport aux éléments magnétiques 32. Ils sont donc positionnés au niveau d'une extrémité des éléments magnétiques 32.

En pratique, ces capteurs CA, CB, CC sont décalés angulairement, autour de l'axe X, par rapport aux bobinages 29, pour des raisons d'encombrement. Ces capteurs CA, CB, CC délivrent en particulier des éléments d'information requis pour être en mesure de générer des signaux de commande gouvernant le fonctionnement du moteur électrique 16, mais également pour déterminer la position du rotor 13, en particulier le nombre de tours effectués, la position de fin de course, la position intermédiaire, la détection de position bloquée. Il est possible d'utiliser un nombre de capteurs CA, CB, CC égal au nombre de phases du stator 14, ici trois phases, ou un nombre de capteurs CA, CB, CC inférieur au nombre de phases et de reconstituer l'information du ou des capteurs CA, CB, CC manquants. Comme représenté en figure 5, les capteurs CA, CB, CC sont ici disposés à des intervalles angulaires réguliers de 60° ou 120° autour de l'axe de rotation X du rotor 13, de préférence sur le circuit imprimé 38 qui est lui-même positionné orthogonalement à l'axe de rotation X du rotor 13, notamment un circuit en forme de demi-lune.

La table 1 ci-dessous illustre la table de vérité correspondant aux signaux délivrés par trois capteurs CA, CB, CC disposés dans un moteur électrique 16 synchrone à aimants permanents à stator 14 triphasé conventionnel, piloté par un ensemble de six transistors. Ces signaux binaires sont déphasés les uns par rapport aux autres.

| | | Signaux | | |
|---|---|---|---|---|
| | | S1 | S2 | S3 |
| Instant | T1 | 0 | 0 | 1 |
| | T2 | 0 | 1 | 1 |
| | T3 | 0 | 1 | 0 |
| | T4 | 1 | 1 | 0 |
| | T5 | 1 | 0 | 0 |
| | T6 | 1 | 0 | 1 |

Différents types d'aimants en ferrite sont connus, à savoir :

- D'une part, les aimants isotropes, fabriqués notamment selon une méthode dite sèche, par pressage. Les solides obtenus sont ensuite magnétisés dans la direction souhaitée pour former les aimants.
- D'autre part, les aimants anisotropes, fabriqués selon une méthode dite humide, par injection dans un moule sous l'effet d'un champ magnétique. La direction du champ magnétique lors de la production détermine la direction d'aimantation des aimants.

Le grand avantage des aimants en ferrite, outre leur coût, est leur insensibilité à la corrosion, il n'est donc pas nécessaire de leur faire subir un traitement de surface.

De préférence, les aimants permanents 32 sont fabriqués selon la méthode humide.

Le procédé de moulage des aimants en ferrite anisotropes par la méthode humide fournit des aimants ayant un volume approximatif et un état de surface grossier. De ce fait, pour obtenir les aimants de forme finale, ceux-ci sont encore usinés, c'est-à-dire rectifiés, une fois moulés. Ce procédé de rectification se fait sur des bancs le long desquels les aimants coulissent pour être usinés.

Si l'épaisseur des aimants est trop fine, ceux-ci risquent de casser lors du procédé de rectification. Ainsi, l'épaisseur radiale e32 des aimants 32, de même que le rapport e32/ e32 épaisseur sur largeur, influent sur la possibilité de produire ces aimants de façon industrielle.

De manière avantageuse, lors de la fabrication d'un moteur électrique 16 d'un actionneur électromécanique 12, un rotor 13 ayant un corps de rotor 31 commun est assemblé avec soit un premier stator 14a soit avec un deuxième stator 14b suivant le diamètre D3 prévu pour le moteur électrique 16 à produire, ce diamètre D3 dépendant lui-même du diamètre intérieur D1 du tube d'enroulement 4 ou de la section du rail dans lequel est destiné à être installé le moteur électrique16.

Le fait d'utiliser un corps de rotor 31 commun pour une gamme d'actionneurs électromécaniques 12, pouvant être réalisés avec des diamètres extérieurs différents et comprenant des moteurs électriques 16a et 16b pourvus de stators 14a, 14b différents et délivrant différentes valeurs de couple, permet de réduire les coûts de développement et d'industrialisation des actionneurs électromécaniques 12 et, en outre, d'étendre une gamme d'actionneurs électromécaniques 12.

L'utilisation du même corps de rotor 31, voire du même rotor 13, pour une gamme d'actionneurs électromécaniques 12 permet de répondre aux besoins d'applications nécessitant des moteurs électriques de diamètres différents, pouvant délivrer des valeurs de couple différentes, notamment à des applications de motorisation de volets ou de stores de type, de taille et/ou de poids différents ou destinés à des installations différentes, par exemple en intérieur ou en extérieur d'un bâtiment 100.

Pour permettre de réutiliser un même corps de rotor 31 sur des actionneurs électromécaniques comprenant des moteurs électriques 16 de diamètres D3 et D3' différents, avec des valeurs D3 et D3' par exemple respectivement égales à 35 et 45mm environ, la contrainte de fabrication du stator 14 est plus forte pour les moteurs électriques dont le diamètre D3 est le plus petit. En effet, la différence en diamètre est ici d'environ 10mm.

Cette contrainte peut être résolue d'une part par une géométrie différente du stator 14 des actionneurs électromécaniques 12 de la gamme : dans le cas du premier actionneur électromécanique 12 dont le moteur électrique de diamètre D3' le plus grand, les pôles 28 sont répartis vers l'extérieur et les bobinages 29 sont réalisés par l'extérieur du stator 14a. On rapporte ensuite une culasse sur l'extérieur du stator 14a pour le compléter ; dans le cas du second actionneur électromécanique 12 dont le moteur électrique 16 a le diamètre D3 le plus petit, les pôles 28 sont répartis vers l'intérieur du stator 14b à partir de la paroi périphérique 30 circulaire fermée. Cela induit une contrainte sur le procédé de bobinage.

Selon un mode de réalisation alternatif, les stators 14a et 14b ont tous deux leurs pôles répartis vers l'intérieur à partir de la paroi périphérique 30 circulaire fermée. Les premier et deuxième rotors 13 des premier et deuxième moteurs électriques 16 peuvent comprendre un arbre traversant, de telle sorte que les premier et deuxième moteurs électriques 16 sont des moteurs à double sortie, chaque sortie pouvant être accouplée à un arbre d'entraînement pour l'enroulement et le déroulement de cordons de l'écran.

Dans tous les cas, les stators 14a ou 14b sont obtenus préférentiellement par empilement de tôles formant leur circonférence complète avant mise en place des bobinages, et non par un assemblage de secteurs bobinés ayant chacun une ou plusieurs dents.

## Revendications

**1.** Actionneur électromécanique (12) configuré pour la commande d'écrans (2) appartenant à un dispositif d'occultation de type store ou volet, l'actionneur étant configuré pour mettre en rotation un tube d'enroulement d'un écran en étant inséré dans ce tube d'enroulement ou un arbre d'entraînement sur lequel s'enroulent des cordons de déploiement d'un écran en étant inséré dans un rail, l'actionneur comprenant un moteur électrique (16) à courant continu sans balais à commutation électronique, un rotor (13) et un stator (14) du moteur électrique (16) étant positionnés de manière coaxiale autour d'un axe de rotation (X), un diamètre extérieur (D3) du stator dépendant d'un diamètre intérieur (D1) du tube d'enroulement ou de la section du rail, le rotor (13) comprenant un corps de rotor (31) muni d'éléments magnétiques (32) répartis sur la surface extérieure du rotor (13), les éléments magnétiques (32) du rotor (13) étant entourés par le stator (14), lui-même formé par un noyau de stator (41) comprenant une paroi périphérique (30) circulaire et des éléments polaires (28) supportant des bobinages (29), les éléments polaires (28) étant répartis sur l'intérieur de la paroi périphérique (30) du stator, l'actionneur électromécanique (12) étant **caractérisé en ce que** :

- le rapport (R1) entre le diamètre extérieur (D3) du stator (14) et son diamètre intérieur (D4) est inférieur à 1,7, de préférence inférieur à 1,6, de préférence encore inférieur à 1,58 et

- le rapport (R2) entre la longueur axiale (L14) du stator et le diamètre extérieur (D3) du stator (14) est supérieur à 1,5, de préférence supérieur à 2.

2. Actionneur électromécanique (12) selon la revendication précédente, **caractérisé en ce que** le stator comprend un total de six éléments polaires, ce qui en fait un stator à six pôles.

3. Actionneur électromécanique (12) selon l'une des revendications précédentes, **caractérisé en ce que** le diamètre extérieur (D3) du moteur électrique (16) de l'actionneur est inférieur à 40 mm, de préférence inférieur à 36 mm.

4. Actionneur électromécanique (12) selon l'une des revendications précédentes, **caractérisé en ce que** les éléments magnétiques (32) sont formés par des aimants permanents en ferrite dont l'épaisseur radiale maximale (e32) est supérieure à 3 mm.

5. Actionneur électromécanique (12) selon l'une des revendications précédentes, **caractérisé en ce que** le diamètre extérieur (D5) du rotor (13) est au moins égal à la moitié du diamètre extérieur (D3) du stator (4).

6. Actionneur électromécanique (12) selon les revendications 3 et 4, **caractérisé en ce que** les aimants permanents (32) sont réalisés sous forme de tuiles et collés sur le corps de rotor (31) qui est cylindrique.

7. Actionneur électromécanique (12) selon l'une des revendications précédentes, **caractérisé en ce que** le rotor (13) comprend quatre ou huit aimants permanents (32) en forme de tuiles répartis sur la périphérie du corps de rotor (31), alors que le stator (14) comprend six pôles.

8. Actionneur électromécanique (12) selon l'une des revendications précédentes, **caractérisé en ce que** les éléments magnétiques (32) sont des aimants anisotropes formés par un procédé de pressage humide et, de préférence, usinés après moulage.

9. Actionneur électromécanique (12) selon l'une des revendications précédentes, **caractérisé en ce que** le noyau de stator (41) est formé par un empilement de tôles et **en ce que** les éléments polaires (28) du noyau de stator (41) comprennent, en extrémité d'une dent (28a) en saillie vis-à-vis de la paroi périphérique (30) du stator (14), un épanouissement (28b) dont la largeur $\ell 28_1$, $\ell 28_2$) est variable le long de l'axe de rotation (X), sur la longueur de l'empilement de tôles.

10. Actionneur électromécanique (12) selon l'une des revendications précédentes, **caractérisé en ce que** la paroi périphérique (30) du stator (14) est circulaire, fermée et obtenue à partir d'un empilement de tôles formant chacune une circonférence fermée.

11. Actionneur électromécanique (12) selon l'une des revendications précédentes, **caractérisé en ce que** la puissance massique de l'actionneur électromécanique (12) est inférieure à 65 watts par kilogramme.

12. Actionneur électromécanique (12) selon l'une des revendications précédentes, **caractérisé en ce qu'**il comprend des flasques (34, 35) en matière isolante sur lesquels sont connectés les extrémités des bobinages (29) du stator (14).

13. Actionneur électromécanique (12) selon l'une des revendications précédentes, **caractérisé en ce qu'**il comprend des flasques métalliques (36, 37) assemblés de part et d'autre du corps de stator et supportant le rotor (13) au moyens de paliers ou roulements (26, 27).

14. Installation domotique de fermeture ou de protection solaire comprenant un écran (2) enroulable sur un tube d'enroulement (4) ou un écran (2) comprenant des cordons de déploiement s'enroulant sur un arbre d'entraînement, le tube d'enroulement ou l'arbre d'entraînement étant entraîné en rotation par un actionneur électromécanique (12) selon l'une des revendications précédentes.

**Patentansprüche**

1. Elektromechanischer Aktuator (12), der für die Steuerung von Abschirmungen (2) ausgelegt ist, die zu einer Abdeckvorrichtung vom Typ Vorhang oder Fensterladen gehören, wobei der Aktuator dazu ausgelegt ist, ein Wickelrohr einer Abschirmung in Drehung zu versetzten, indem er in dieses Wickelrohr eingesetzt ist oder eine Antriebswelle, auf der sich Schnüre zum Entfalten einer Abschirmung wickeln, indem er in eine Schiene eingesetzt ist, wobei der Aktuator einen elektronisch kommutierten bürstenlosen Gleichstrom-Elektromotor (16) umfasst, wobei ein Rotor (13) und ein Stator (14) des Elektromotors (16) koaxial um eine Drehachse (X) positioniert sind, wobei ein Außendurchmesser (D3) des Stators von einem Innendurchmesser (D1) des Wickelrohrs oder dem Querschnitt der Schiene abhängt, wobei der Rotor (13) einen Rotorkörper (31) umfasst, der mit magnetischen Elementen (32) versehen ist, die auf der Außenfläche des Rotors (13) verteilt sind, wobei die magnetischen Elemente (32) des Rotors (13) von dem Stator (14) umgeben sind, der wiederum von einem Statorkern (41) gebildet ist, der eine kreisförmige Umfangswand (30) und Polelemente (28) umfasst, die Wicklungen (29) tragen, wobei die Polelemente (28) auf der Innenseite der Umfangswand (30) des Stators verteilt sind, wobei der elektromechanische Aktuator (12) **dadurch gekennzeichnet ist, dass**:

- das Verhältnis (R1) zwischen dem Außendurchmesser (D3) des Stators (14) und seinem Innendurchmesser (D4) kleiner als 1,7, vorzugsweise kleiner als 1,6, bevorzugter kleiner als 1,58 ist, und
- das Verhältnis (R2) zwischen der axialen Länge (L14) des Stators und dem Außendurchmesser (D3) des Stators (14) größer als 1,5, vorzugsweise größer als 2, ist.

2. Elektromechanischer Aktuator (12) nach vorhergehendem Anspruch, **dadurch gekennzeichnet, dass** der Stator insgesamt sechs Polelemente umfasst, wodurch er zu einem sechspoligen Stator wird.

3. Elektromechanischer Aktuator (12) nach einem der vorhergehenden Ansprüche, **dadurch gekennzeichnet, dass** der Außendurchmesser (D3) des Elektromotors (16) des Aktuators kleiner als 40 mm, vorzugsweise kleiner als 36 mm, ist.

4. Elektromechanischer Aktuator (12) nach einem der vorhergehenden Ansprüche, **dadurch gekennzeichnet, dass** die magnetischen Elemente (32) von Ferrit-Permanentmagneten gebildet sind, deren maximale radiale Dicke (e32) größer als 3 mm ist.

5. Elektromechanischer Aktuator (12) nach einem der vorhergehenden Ansprüche, **dadurch gekennzeichnet, dass** der Außendurchmesser (D5) des Rotors (13) mindestens halb so groß wie der Außendurchmesser (D3) des Stators (4) ist.

6. Elektromechanischer Aktuator (12) nach den Ansprüchen 3 und 4, **dadurch gekennzeichnet, dass** die Permanentmagnete (32) als Kacheln ausgebildet und auf den Rotorkörper (31), der zylindrisch ist, aufgeklebt sind.

7. Elektromechanischer Aktuator (12) nach einem der vorhergehenden Ansprüche, **dadurch gekennzeichnet, dass** der Rotor (13) vier oder acht dachziegelförmige Permanentmagnete (32) umfasst, die auf dem Umfang des Rotorkörpers (31) verteilt sind, während der Stator (14) sechs Pole umfasst.

8. Elektromechanischer Aktuator (12) nach einem der vorhergehenden Ansprüche, **dadurch gekennzeichnet, dass** die magnetischen Elemente (32) anisotrope Magnete sind, die durch ein Nasspressverfahren geformt und vorzugsweise nach dem Formen bearbeitet werden.

9. Elektromechanischer Aktuator (12) nach einem der vorhergehenden Ansprüche, **dadurch gekennzeichnet, dass** der Statorkern (41) von einem Blechstapel gebildet ist und dass die Polschuhe (28) des Statorkerns (41) am Ende eines Zahns (28a), der gegenüber der Umfangswand (30) des Stators (14) vorsteht, eine Aufwölbung (28b) umfassen, deren Breite ($\ell28_1$, $\ell28_2$) entlang der Drehachse (X) über die Länge des Blechstapels variabel ist.

10. Elektromechanischer Aktuator (12) nach einem der vorhergehenden Ansprüche, **dadurch gekennzeichnet, dass** die Umfangswand (30) des Stators (14) kreisförmig, geschlossen und aus einem Stapel von Blechen erhalten ist, die jeweils einen geschlossenen Umfang bilden.

11. Elektromechanischer Aktuator (12) nach einem der vorhergehenden Ansprüche, **dadurch gekennzeichnet, dass** die spezifische Leistung des elektromechanischen Aktuators (12) weniger als 65 Watt pro Kilogramm beträgt.

12. Elektromechanischer Aktuator (12) nach einem der vorhergehenden Ansprüche, **dadurch gekennzeichnet, dass** er Flansche (34, 35) aus isolierendem Material umfasst, auf denen die Enden der Wicklungen (29) des Stators (14) verbunden sind.

**13.** Elektromechanischer Aktuator (12) nach einem der vorhergehenden Ansprüche, **dadurch gekennzeichnet, dass** er Metallflansche (36, 37) umfasst, die auf beiden Seiten des Statorkörpers zusammengebaut sind und den Rotor (13) mithilfe von Lagern oder Wälzlagern (26, 27) tragen.

**14.** Hausautomationsanlage zum Schließen oder Sonnenschutz, die eine auf einem Wickelrohr (4) aufwickelbare Abschirmung (2) oder eine Abschirmung (2) umfasst, die Schnüre zum Entfalten umfasst, die sich auf eine Antriebswelle wickeln, wobei das Wickelrohr oder die Antriebswelle von einem elektromechanischen Aktuator (12) nach einem der vorhergehenden Ansprüche rotatorisch angetrieben wird.

**Claims**

**1.** An electromechanical actuator (12) for controlling screens (2) which belong to a blackout device of the blind or shutter type, the actuator being configured to set a winding tube of a screen in rotation while being inserted into this winding tube or a drive shaft on which cords for deploying the screen are wound, while being inserted in a rail, the actuator comprising an electronically-switched brushless DC electric motor (16), a rotor (13) and a stator (14) of the electric motor (16) being positioned coaxially around an axis of rotation (X), an outer diameter (D3) of the stator depending on an inner dimeter (D1) of the winding tube or on the section of the rail, the rotor (13) comprising a rotor body (31) provided with magnetic elements (32) distributed over the outer surface of the rotor (13), the magnetic elements (32) of the rotor (13) being surrounded by the stator (14), which in turn is formed by a stator core (41) comprising a circular peripheral wall (30) and pole elements (28) supporting windings (29), the pole elements (28) being distributed on the inside of the peripheral wall (30) of the stator, the electromechanical actuator (12) being **characterized in that**:

- the ratio (R1) between the outer diameter (D3) of the stator (14) and its inner diameter (D4) is less than 1.7, preferably less than 1.6, still more preferably less than 1.58, and
- the ratio (R2) between the axial length (L14) of the stator and the outer diameter (D3) of the stator (14) is greater than 1.5, preferably greater than 2.

**2.** The electromechanical actuator (12) according to the preceding claim, **characterized in that** the stator comprises a total of six pole elements, which makes it a stator with six poles.

**3.** The electromechanical actuator (12) according to one of the preceding claims, **characterized in that** the outer diameter (D3) of the electric motor (16) of the actuator is smaller than 40 mm, preferably smaller than 36 mm.

**4.** The electromechanical actuator (12) according to one of the preceding claims, **characterized in that** the magnetic elements (32) are formed by ferrite permanent magnets, the maximum radial thickness (e32) of which is greater than 3 mm.

**5.** The electromechanical actuator (12) according to one of the preceding claims, **characterized in that** the outer diameter (D5) of the rotor (13) is at least equal to half the outer diameter (D3) of the stator (4).

**6.** The electromechanical actuator (12) according to claims 3 and 4, **characterized in that** the permanent magnets (32) are made in the form of tiles and glued on the rotor body (31), which is cylindrical.

**7.** The electromechanical actuator (12) according to one of the preceding claims, **characterized in that** the rotor (13) comprises four or eight permanent magnets (32) in the form of tiles distributed on the periphery of the rotor body (31), while the stator (14) comprises six poles.

**8.** The electromechanical actuator (12) according to one of the preceding claims, **characterized in that** the magnetic elements (32) are anisotropic magnets formed by a wet pressing method, and preferably machined after molding.

**9.** The electromechanical actuator (12) according to one of the preceding claims, **characterized in that** the stator core (41) is formed by a stack of sheets and **in that** the pole elements (28) of the stator core (41) comprise, at the end of a tooth (28a) protruding with respect to the peripheral wall (30) of the stator (14), an enlargement (28b), the width ($\ell 28_1$, $\ell 28_2$) of which is variable along the rotation axis (X), over the length of the stack of sheets.

**10.** The electromechanical actuator (12) according to one of the preceding claims, **characterized in that** the peripheral wall (30) of the stator (14) is circular, closed and obtained from a stack of sheets each forming a closed circumference.

11. The electromechanical actuator (12) according to one of the preceding claims, **characterized in that** the power to weight ratio of the electromechanical actuator (12) is less than 65 watts per kilogram.

12. The electromechanical actuator (12) according to one of the preceding claims, **characterized in that** the actuator comprises flanges (34, 35) made from an insulating material on which the ends of the windings (29) of the stator (14) are connected.

13. The electromechanical actuator (12) according to one of the preceding claims, **characterized in that** it comprises metal flanges (36, 37) assembled on either side of the stator body and supporting the rotor (13) using bearings or ball bearings (26, 27).

14. An automation installation for closing or providing sun protection that comprises a screen (2) able to be wound on a winding tube (4) or a screen including cords for deploying the screen wound on a drive shaft, the winding tube or the drive shaft being rotated by an electromechanical actuator (12) according to one of the preceding claims.

FIG.1

FIG.2

**FIG.3**

FIG.4

FIG.5

## FIG.6

## FIG.7

**EP 3 440 764 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2992183 A
- JP 2006197786 A

- FR 2924664 A